# EUROPEAN PATENT APPLICATION

(11) **EP 1 906 116 A2**
(43) Date of publication of application: **02.04.2008**
(21) Application number: 07018169.8
(22) Date of filing: 15.09.2007
(51) Int. Cl.: F25B 49/02

(54) **Control device of motor for refrigerant compressor**

(30) Priority: 21.09.2006 JP 2006255679; 10.07.2007 JP 2007181056
(71) Applicant: Sanyo Electric Co., Ltd., Moriguchi-shi, Osaka-fu (JP)
(72) Inventor: Nojima, Kenji, Ota-shi, Gunma (JP); Kubo, Mamoru, Isesaki-shi, Gunma (JP)
(74) Representative: Leitner, Waldemar

(57) **Abstract**

The present invention provides, in case of driving to control a motor for a refrigerant compressor by a sensorless system, a driving device that reduces vibrations and noises at starting, and realizes a smooth connection to the sensorless system. The driving device 22 includes a main inverter circuit 1 that applies quasi three-phase ac voltages to and drives the motor 21 for driving the refrigerant electric compressor forming a refrigerant circuit, current sensors 6V and 6W that detect the currents flown into the motor, and a control circuit 23 that executes driving and controlling by the sensorless system on the basis of the outputs from the current sensors. The control circuit applies predetermined starting currents that generate a rotational magnetic field to the motor and starts the motor, and after accelerating to a predetermined connecting frequency, shifts to driving and controlling by the sensorless system, and varies the starting currents and connecting frequency in accordance with a load of the compressor.

## Description

### BACKGROUND OF THE INVENTION

### Field of the Invention

The present invention relates to a control device that controls a motor for a refrigerant compressor by the sensorless system not using a magnetic pole position sensor, specifically by a vector control using a d-axis being the magnetic flux direction formed by magnetic poles of a rotor and a q-axis electrically perpendicular to the d-axis.

### Description of the Related Art

In controlling the rotation of a synchronous motor provided with a permanent magnet to a rotor by the sensorless system such as the vector control, the system estimates the rotational position (magnetic pole position) of the rotor, instead of directly detecting the rotational position of the rotor by using a magnetic sensor such as a hall element. The following method can be cited as a practical example of the vector control. In contrast to a d-q rotation coordinate system wherein the magnetic pole position of the rotor is the rotational position of a real angle θ d, the method assumes a dc-qc rotation coordinate system wherein the magnetic pole position corresponds to an estimated angle θ dc, calculates an axial error Δθ between the real angle θ d and the estimated angle θ dc, controls current-carrying timings to stator windings of the synchronous motor so as to make the axial error Δθ zero, and brings the estimated magnetic pole position in coincidence with the real magnetic pole position to thereby bring the angular velocity of the rotor in coincidence with the angular velocity of the rotating magnetic field by the stator windings, thus preventing the rotor from stepping out and maintaining a smooth rotation.

According to the above vector control, the control of a rotational frequency of the electric motor can be realized without using the magnetic pole position sensor. However, the control is made on the basis of the rotation of the magnetic pole position, and in a state that the rotor is in stop, the magnetic pole position does not rotate and the rotational position of the rotor cannot be estimated. Accordingly, a method is conceived which generates a rotating magnetic field by applying starting currents of a predetermined frequency to the stator windings at starting the synchronous motor, forcibly starts the rotor in this magnetic field, and switches to the sensorless system such as the vector control at a time when the rotation of the rotor is accelerated to a predetermined rotational frequency with which the vector control is possible (patent document for reference: JP-A 1995-107777).

In the electric motor that drives the refrigerant compressor forming a refrigerant circuit, when it is used for a domestic air conditioner or refrigerator, the motor is controlled not to be restarted for several minutes from a stop of the motor. This is because the high-low pressure difference inside the refrigerant circuit immediately after the stop is expanded and the starting load to the motor becomes heavy, and it is necessary to prevent the temperature of the motor inside the refrigerant compressor from rising over a designed temperature at starting and to protect the windings. However, especially in a refrigerant compressor used for an on-vehicle air conditioner and so forth, many cases do not secure a sufficient interval for inhibiting a restart after a stop, due to a switch operation and so forth, and demand an immediate start and initiation of air conditioning; accordingly, it has been necessary to start the refrigerant compressor as the high-low pressure difference inside a refrigerating cycle is maintained. Therefore, the conventional method has adopted a starting process that can cope with the maximum load (maximum differential pressure).

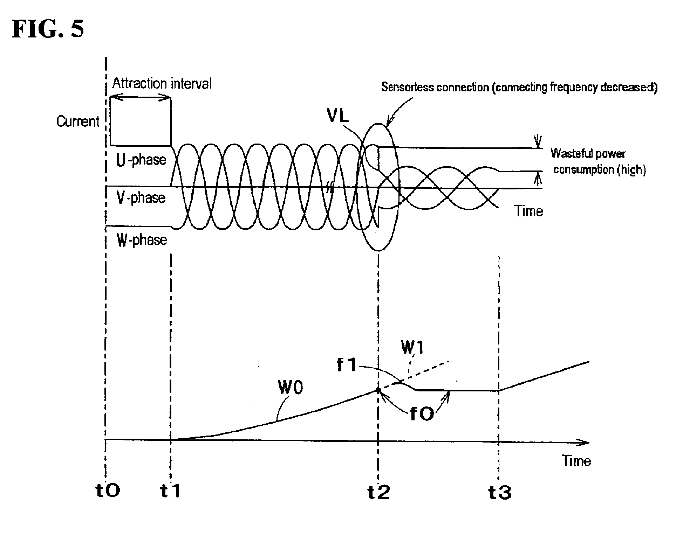

The conventional starting process will be described with Fig. 5. The conventional process fixes, in a state that the refrigerant compressor (motor) is in stop, a rotor at a rotational position where the rotor balances with a fixed magnetic field generated by flowing currents into U-phase through W-phase. In case of a 6-teeth 4-pole motor, for example, since the pattern of current-carrying combinations to the stator windings (U-phase, V-phase, and W-phase) is divided into six by the electric angle of 60° each, the rotational position of the rotor is fixed at a specific position among the six-divisions. The rotational position (electric angle) of the rotor being specified, the conventional process carries currents into the stator windings in the next current carrying pattern corresponding to this electric angle, and thereby generates a rotating magnetic field to start the rotor. After starting the motor, the conventional process increases voltages applied to or currents carried into the stator windings to accelerate the rotation of the rotor. Thereafter, in case of estimating the rotational position of the rotor by the so-called sensorless system that estimates the rotational position by the variations of the currents flown into the stator windings and the variations of the inter-phase voltages without using a direct detection means such as a hall element, the conventional process switches to driving the motor by the control by the sensorless system, at a time when the rotation of the rotor is accelerated to a predetermined connecting rotational frequency at which the sensorless system can estimate the rotational position (magnetic pole position) of the rotor.

In this case, to securely start the motor even at the maximum load, the conventional process as mentioned above takes a long time for fixing the rotor at the rotational position, sets high currents carried into the stator windings, and sets high currents carried into the stator windings at starting. The rotational frequency is also high, at which the conventional process switches to driving the rotor by the sensorless system, and the rotation of the rotor is accelerated for a comparably long time until reaching this high rotational frequency. Generally in the drive by the sensorless system, the optimum voltages corresponding to the rotational frequency of the rotor (or the currents carried into the stator windings equivalent to the voltages) are set in advance in a form of a function or table, in view of the characteristics of the motor and the magnitude of the load estimated. Therefore, if there is a significant difference between the voltages used for starting at the above switching and the voltages used for the drive by the sensorless system, it will generate unnecessary acceleration or deceleration to the rotor due to sharp drops of the currents, which raises a problem of vibrations and noises. And if the high-low pressure difference in the refrigerant circuit is well balanced and the actual load is zero or very light, a wasteful power will be consumed, and since there are excessive and sharp drops of the currents during shifting to the sensorless system, there is a risk of stepping out and failure in starting the refrigerant compressor (motor) under some circumstances.

As shown in Fig. 5, the starting of the motor being initiated at time t0, first, currents are carried into specified stator windings U-phase and V-phase, for example, during the time t0 - t1 to fix the position of the rotor. The applied voltage to the stator windings in this case corresponds to VH. Next, during the time t1 - t2 is maintained the state that the current-carrying pattern is switched at the frequency f0 by the applied voltage VH. During this time, the rotational frequency of the rotor is accelerated in order (refer to w0). When the rotational frequency of the rotor reaches the frequency f0 or its equivalent (time t2), the drive of the rotor is switched to the drive by the sensorless system. Here, the applied voltage to the stator windings is switched from VH or its equivalent to VL or its equivalent (the switching frequency of the current-carrying pattern is f0). However, due to the inertia during acceleration, the rotational frequency of the rotor is overshot from the frequency f0 or its equivalent to the frequency f1 or its equivalent. Thereafter, the rotational frequency is converged to the frequency f0 or its equivalent. The conventional process sets the time interval t2 - t3 as a convergence time. After the time t3, the rotation of the rotor is accelerated to a target rotational frequency by the sensorless system. A sharp drop in the acceleration of the rotor accompanied with this convergence mainly generates vibrations and noises. Further, depending on the magnitude of an induced current by this overshoot, a harmful influence has been given to the switching elements and so forth. Here, the symbol w1 shows an increase of the frequency equivalent to the rotational frequency when the rotor maintains the acceleration as it is.

### SUMMARY OF THE INVENTION

The present invention has been made in view of solving the above conventional technical problems, and provides, in case of driving and controlling a motor for a refrigerant compressor by the sensorless system, a control device that realizes a smooth connection to the sensorless system and reduces vibrations and noises during starting the motor.

According to a first aspect of the present invention, the control device of a motor for a refrigerant compressor includes a refrigerating cycle annularly connecting with a refrigerant piping at least a refrigerant compressor, a heat-source-side heat exchanger, a decompression device, and a user-side heat exchanger, and a control device that switches ON/OFF switching elements forming an inverter circuit by a vector control using a d-axis being a magnetic flux direction that the magnetic poles of a rotor of the refrigerant compressor form and a q-axis electrically perpendicular to the d-axis, and thereby controls currents carried into stator windings. And, the control device sequentially switches ON/OFF patterns of the switching elements according to predetermined current carrying patterns to the stator windings by the vector control to drive the refrigerant compressor, sequentially switches, at starting the refrigerant compressor, the predetermined ON/OFF patterns of the switching elements by predetermined cycles to start the refrigerant compressor, shifts to a drive of switching the ON/OFF pattern of the switching element concerned by the vector control, when a rotational frequency of the rotor reaches a set rotational frequency, and varies the ON/OFF patterns of the switching elements at starting or voltages applied to the stator windings and the set rotational frequency, on the basis of a state of the refrigerating cycle at starting the refrigerant compressor.

According to a second aspect of the invention, in the control device of a motor for a refrigerant compressor, in the first aspect of the invention, the ON/OFF patterns of the switching elements at starting or the voltages applied to the stator windings are set in correspondence with the set rotational frequency.

According to a third aspect of the invention, in the control device of a motor for a refrigerant compressor, in the second aspect of the invention, the ON/OFF patterns of the switching elements at starting or the voltages applied to the stator windings vary in a manner that the currents carried in order into the stator windings decrease, and the currents decrease at least close to values equivalent to corresponding voltages when the set rotational frequency is applied to the rotational frequency in a voltage vs. rotational frequency characteristic used at driving the refrigerant compressor.

According to a fourth aspect of the invention, in the control device of a motor for a refrigerant compressor, in the second aspect of the invention, the ON/OFF patterns of the switching elements at starting or the voltages applied to the stator windings vary in a manner that the currents carried in order into the stator windings increase.

According to a fifth aspect of the invention, in the control device of a motor for a refrigerant compressor, in the second aspect of the invention, the ON/OFF patterns of the switching elements at starting or the voltages applied to the stator windings vary in a manner that the currents carried in order into the stator windings decrease and thereafter increase.

According to a sixth aspect of the invention, in the control device of a motor for a refrigerant compressor, in the second aspect of the invention, the ON/OFF patterns of the switching elements at starting or the voltages applied to the stator windings vary in a manner that the currents carried in order into the stator windings decrease and thereafter increase, and the currents vary in the same manner as an increasing slope of a voltage in a voltage vs. rotational frequency characteristic used at driving the refrigerant compressor.

In case of a motor for a refrigerant compressor being driven and controlled by the sensorless system, the present invention provides a control device that starts the refrigerant compressor (motor) without a failure during shifting to the sensorless system, reduces vibrations and noises at starting, and realizes a smooth connection to the sensorless system. Further, since an appropriate set rotational frequency is used in accordance with a state of the refrigerating cycle at starting, the control device saves unnecessary long time for starting the motor for the refrigerant compressor, and shortens the starting time.

### BRIEF DESCRIPTION OF THE DRAWINGS

Fig. 1 is an electric circuit diagram illustrating a control device of a motor for a compressor relating to the embodiment of the present invention;
Fig. 2 is a refrigerant circuit diagram of an on-vehicle air conditioner made up with an electric compressor driven by the motor in Fig. 1;
Fig. 3 is a flow chart explaining a varying control process of a starting current (starting torque) according to a load and a connecting frequency, which a control circuit in Fig. 1 executes;
Fig. 4 is a chart illustrating waveforms of currents applied to the motor by the control device in Fig. 1;
Fig. 5 is a chart illustrating current waveforms during starting a motor in the conventional technique;
Fig. 6 is a chart illustrating one example of current-carrying patterns of the motor for the compressor relating to the embodiment of the present invention;
Fig. 7 is a chart illustrating a variation of voltages substantially applied to the stator windings, from a time of starting the rotor till a time of a rotational frequency of the rotor reaching a rotational frequency corresponding to the connecting frequency of the motor for the compressor relating to the embodiment of the present invention; and
Fig. 8 is a chart illustrating another state of the variation of the voltages substantially applied to the stator windings, from a time of starting the rotor till a time of the rotational frequency of the rotor reaching the rotational frequency corresponding to the connecting frequency of the motor for the compressor relating to the embodiment of the present invention.

### DESCRIPTION OF THE PREFERRED EMBODIMENT

The present invention relates to a control device of a refrigerant compressor including a refrigerating cycle annularly connecting with a refrigerant piping at least a refrigerant compressor, a heat-source-side heat exchanger, a decompression device, and a user-side heat exchanger, and a control device that switches ON/OFF switching elements forming an inverter circuit by a vector control using a d-axis being a magnetic flux direction that the magnetic poles of a rotor of the refrigerant compressor form and a q-axis electrically perpendicular to the d-axis, and thereby controls currents carried into stator windings, wherein the control device sequentially switches ON/OFF patterns of the switching elements according to predetermined current carrying patterns to the stator windings by the vector control to drive the refrigerant compressor, sequentially switches, at starting the refrigerant compressor, the predetermined ON/OFF patterns of the switching elements by predetermined cycles to start the refrigerant compressor, shifts to a drive of switching the ON/OFF pattern of the switching element concerned by the vector control, when a rotational frequency of the rotor reaches a set rotational frequency, and varies the ON/OFF patterns of the switching elements at starting or voltages applied to the stator windings and the set rotational frequency, on the basis of a state of the refrigerating cycle at starting the refrigerant compressor. The embodiments of the present invention will be detailed with reference to the appended drawings.

### [First Embodiment]

Next, the embodiment of the present invention will be detailed on the basis of the appended drawings. A motor 21 of the embodiment described hereunder is a permanent magnet built-in type synchronous motor (motor for a refrigerant compressor) that drives a refrigerant compressor 11 using carbon dioxide as a refrigerant, which is incorporated in an on-vehicle air conditioner, for example. The motor 21 is put inside a hermetic container for the above refrigerant compressor 11 together with a rotary compression element, for example, and is used for rotating to drive the compression element. Here, the refrigerant is not limited to a natural refrigerant such as carbon dioxide, hydrocarbon (HC), and so forth, but a fluorocarbon refrigerant such as R134a may be used, which is the main stream of an on-vehicle air conditioner at present.

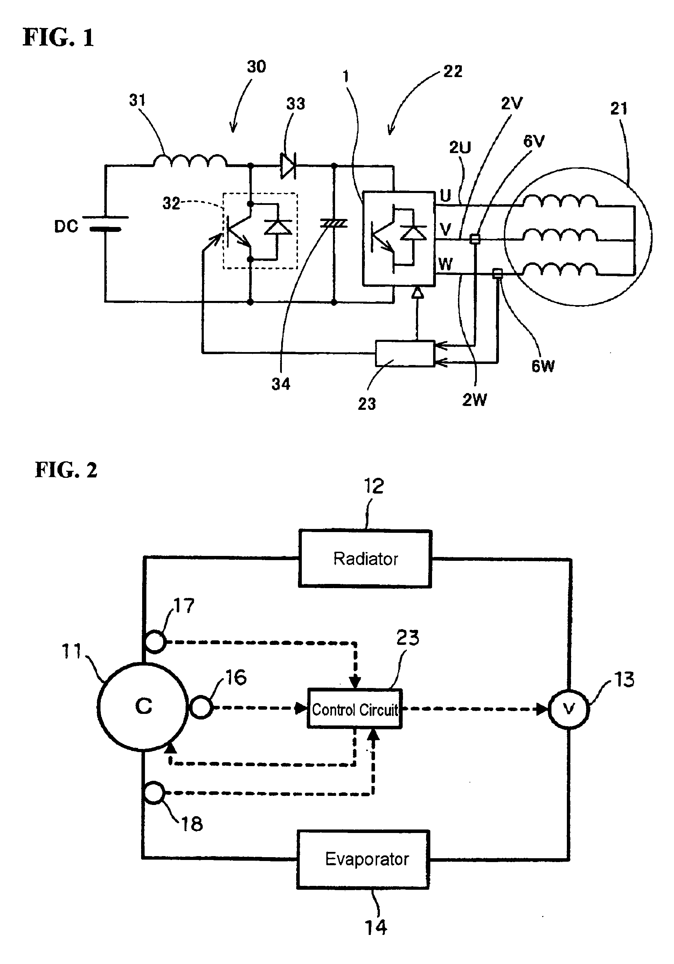

Fig. 1 is an electric circuit diagram illustrating a control device 22 of the motor 21, relating to the embodiment to which the present invention is applied. Fig. 2 is a refrigerant circuit diagram of an on-vehicle air conditioner made up with the refrigerant compressor 11 driven by the motor 21 (one example of a refrigerating cycle with the object of a cooling operation by an evaporator, which can be used also for a heating operation by changing the circulating direction of the refrigerant). In Fig. 2, the numeral 12 signifies a radiator (corresponding to a heat-source-side heat exchanger), 13 signifies an expansion valve (a decompression device formed of a motor-driven expansion valve), and 14 signifies an evaporator (corresponding to a user-side heat exchanger), which constitute a refrigerant circuit along with the refrigerant compressor 11. As the motor 21 for the refrigerant compressor 11 is driven, the carbon dioxide refrigerant is compressed to a supercritical pressure by the compression element into a high-temperature and high-pressure state, which is discharged to the radiator 12.

The refrigerant flown into the radiator 12 radiates the heat therein (heat radiation into the air, for example), and maintains a supercritical state. The refrigerant experiences the heat radiation in the radiator 12 to lower the temperature thereof, and is decompressed by the expansion valve 13. The refrigerant becomes a mixed gas-liquid state in the process of the decompression, which flows into the evaporator 14 to evaporate. Owing to the heat absorbing effect by this evaporation, the evaporator 14 displays the cooling function. And the refrigerant coming out of the evaporator 14 is again absorbed into the refrigerant compressor 11, thus repeating the circulation.

The numeral 16 in Fig. 2 signifies a thermal sensor that detects a temperature (temperature of the case) of the refrigerant compressor 11, 17 signifies a pressure sensor that detects a pressure on the high pressure side of the refrigerant circuit on the discharge side of the refrigerant compressor 11, and 18 signifies a pressure sensor that detects a pressure on the low pressure side of the refrigerant circuit on the intake side of the refrigerant compressor 11. The outputs from these sensors are inputted to a control circuit (control means) 23. On the basis of the outputs from these sensors, the control circuit 23 controls ON-OFF of the motor 21 for the refrigerant compressor 11 and the operation capability (rotational frequency) according to the magnitudes and variations of a load of the refrigerant circuit, and also controls a opening degree of the expansion valve 13 as described hereinafter.

The control device 22 of the embodiment in Fig. 1 includes a main inverter circuit 1 (three-phase inverter) wherein six semiconductor switching elements connected to a dc power supply DC being the battery for a vehicle are connected in a three-phase bridge, a booster circuit 30 that boosts a dc voltage from a dc power supply connected between the main inverter circuit 1 and the dc power supply DC, and the above control circuit 23 and so forth. The booster circuit 30 is made up with an inductor 31, a switching element 32, a diode 33, and a condenser 34, to be able to control the voltage applied to the main inverter circuit 1. The control circuit 23 controls ON/OFF of each of the switching elements of the main inverter circuit 1, and applies voltage waveforms of quasi three-phase sine wave (ON/OFF pattern, generally called PWM/PAM) to the motor 21 for the refrigerant compressor 11. The current supplied to each of stator windings of the motor 21 is controlled by changing the ON/OFF pattern of the quasi sine wave.

The motor 21 is a synchronous motor made up with a stator wherein coils are wound on each of the six teeth, for example, in three-phase connections, and a rotor having a permanent magnet that rotates inside the stator. The secondary lines 2U, 2V, and 2W of the main inverter circuit 1 are correspondingly connected to the three-phase connections of the U-phase, V-phase, and W-phase of the stator.

Further, the secondary lines 2V and 2W of the V-phase and the W-phase, respectively, are provided with current sensors 6V and 6W (current detection means, formed of C.T. or hall element, for example) that detect the currents flown into the V-phase and W-phase of the motor 21. The control circuit 23 takes in the outputs (current detection values) from each of the sensors 6V and 6W, A/D(analog/digital)-converts the outputs, and processes digital signals after A/D-converted. The control circuit 23 may use a universal microcomputer, for example.

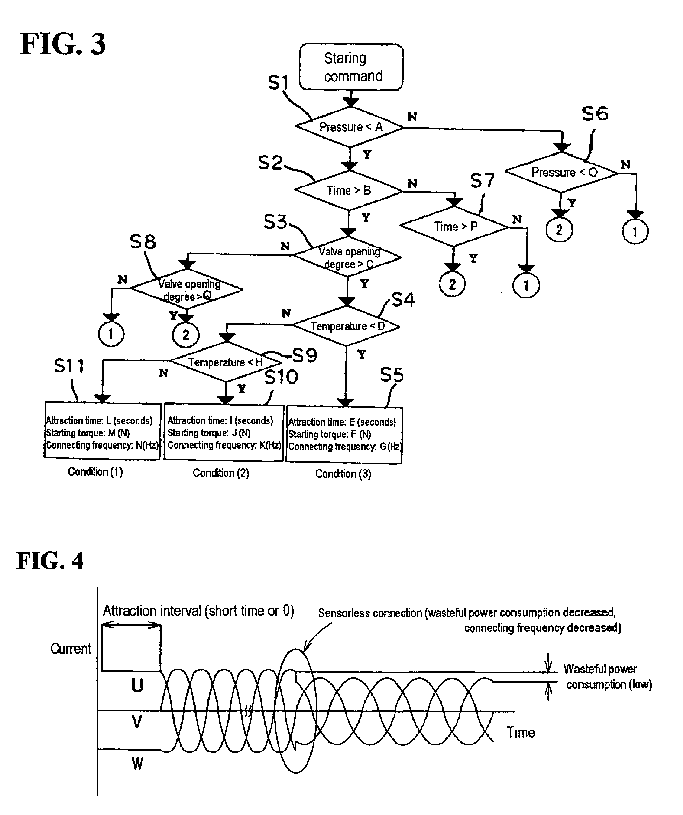

The basic process of the control circuit 23 in starting the motor 21 will be described with Fig. 4. In a state that the refrigerant compressor 11 is in stop, first the control circuit 23 flows currents into U-phase through W-phase of the motor 21 to attract the rotor, and determines the magnetic pole position. Next, in order to generate a rotating magnetic field, the control circuit 23 flows a predetermined starting current into three-phases of U-phase, V-phase, and W-phase; after starting the motor 21, the control circuit 23 accelerates the rotation to raise the frequency. Thereafter, when the control circuit 23 accelerates to a connecting frequency where the magnetic pole position can sufficiently be estimated, the control switches to the sensorless vector control (sensorless system).

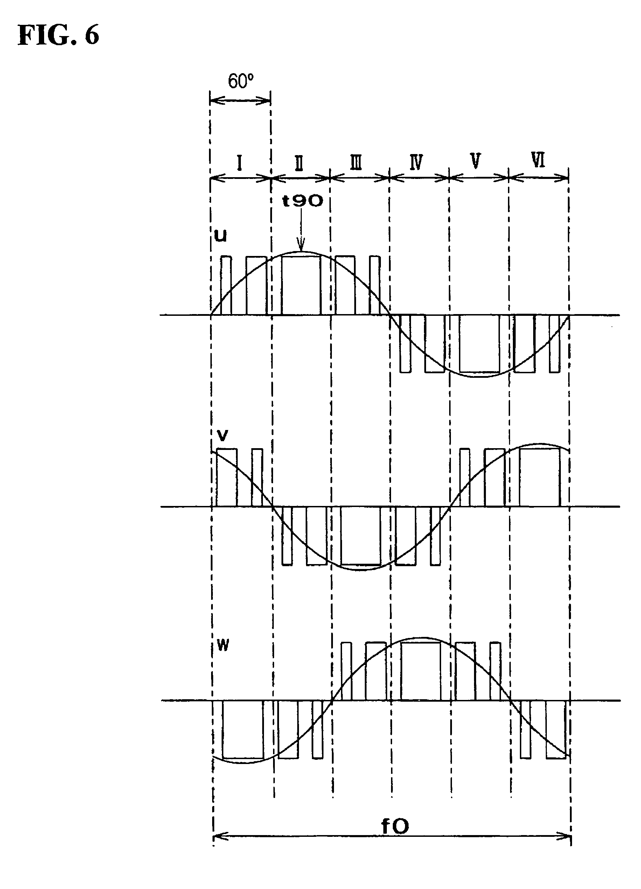

Fig. 6 illustrates one example of the current-carrying patterns, showing an outline image of voltage waveforms for one cycle of the quasi three-phase sine waves, which are acquired by switching the semiconductor switching elements of the main inverter circuit 1 ON/OFF according to a predetermined pattern. By applying such voltage waveforms to the stator windings, current waveforms in a form of three-phase sine waves are generated in the stator windings. Therefore, the voltages corresponding to the currents are substantially applied to the stator windings.

If a sufficient current is flown into (a voltage waveform obtained by chopping the battery voltage by a predetermined frequency is applied to) the U-phase through the V-phase of the stator windings at starting, it will fix the rotor at a predetermined rotational position. The current-carrying pattern at starting initiates applying the voltage waveform to the stator windings from the position t90 corresponding to the electric angle 90° in Fig. 6. Here, the time required for one cycle, that is, the frequency is f0, and the applied voltage is VH. The value of the f0 is about 15 Hz to 20 Hz, provided that the capacity of the refrigerant circuit is about 4 kw to 5 kw for example. The applied voltage VH is about 100 V in the root-mean-square value, provided that the power supply voltage of the refrigerant compressor is ac 100 V on the specification. Here, the optimum values of the frequency f0 and applied voltage VH are set on the basis of the design of the refrigerant circuit and the specification of the refrigerant compressor, and they are not limited to the above values. The adjustment of the applied voltages (carried currents) during driving can be made by adjusting the ON-duty of the chopping waveforms of the voltages applied to the stator windings. Or, it can be made by raising or lowering the dc voltage applied to the main inverter circuit 1.

One example of the vector control for driving the motor by the sensorless system will be described hereunder. The three-phase current-carrying system by the sensorless vector control applies the quasi sine wave voltages as shown in Fig. 6 to each of the three-phase stator windings of the motor 21 to drive the motor; therefore, the three-phase current-carrying system has many advantages compared to the so-called two-phase current carrying system in terms of the current carrying duty ratio, voltage utilization factor, and torque variation. However, the information on the magnetic pole position is required in order to perform an optimum control to the current phase at which the currents are carried into the stator windings in relation to the magnetic flux of the permanent magnet of the rotating rotor.

To detect the magnetic pole position in the three-phase current carrying system by the sensorless system, in relation to the d - q rotational coordinate system (d-axis is the magnetic flux axis that rotates synchronously with the magnetic poles of the rotor, and q-axis is the induced voltage axis) wherein the magnetic pole position of the rotor of the motor 21 comes to the rotational position of a real angle θ d (actual magnetic pole position), now conceived is a dc - qc rotational coordinate system wherein the magnetic pole position comes to an estimated angle θ dc in the control circuit 23. Here, θ dc is created by the control circuit 23, and if the axial error Δ θ (Δ θ = θ dc - θ d) can be calculated, the magnetic pole position of the rotor can be estimated.

In practice, the magnetic pole position of the rotor is estimated by solving a motor model formula wherein voltage commands vd* and vq* for example given to the main inverter circuit 1 are expressed by the winding resistance r, d axis inductance Ld, q-axis inductance Lq, generating constant kE, d-axis current command Id*, q-axis current command Iq*, q axis current detection value Iq, speed command ω1* (inputted from a control circuit inside a vehicle and so forth on the basis of a chamber temperature and a set value of the vehicle, and a solar irradiance and so forth) and so forth, and the axial error Δθ.

The control circuit 23 executes the vector control of the motor 21 by the sensorless system, on the basis of the magnetic pole position of the rotor detected by this estimation. In this case, the control circuit 23 separates the currents flown into the motor 21 from the secondary lines 2V and 2W detected by the current sensors 6V and 6W into a q-axis current component Iq and a d-axis current component Id, and controls the q-axis current command Iq* and the d-axis current command Id* independently. Thereby, in order to execute the inputted speed command ω1*, the control circuit 23 determines the magnitude and the phase of the voltage demands vd* and vq* so that the torque becomes the maximum in relation with the magnetic flux and the current phase, and linearizes the relation between the torque and the manipulated variable.

Further, the control circuit 23 performs the phase adjustment of the currents flown into the motor 21, by using the d-axis current detection value Id, that is, it performs the adjustment of the electric angle of the current carrying pattern. And the control circuit 23 supplies the voltage commands vd* and vq* to the main inverter circuit 1, and controls each of the switching elements to control the currents carried into the stator windings. Thereby, the motor 21 is to be driven at such a rotational speed as to meet the speed command.

The varying control process by the control circuit 23 as to the starting current and connecting frequency during starting the motor 21 will be described with the flow chart in Fig. 3. The control circuit 23 sets a starting current and a connecting frequency during the time of an attraction interval (Fig. 4) of the rotor according to the condition of the load of the refrigerant compressor 11. As to the information whereby the control circuit 23 judges the condition of the load of the refrigerant compressor 11, the control circuit 23 adopts a high-pressure-side pressure PH of the refrigerant circuit that the pressure sensor 17 detects, a halt time ts of the refrigerant compressor 11 or the motor 21 (a time duration from a halt of the refrigerant compressor 11), a valve opening degree VO of the expansion valve 13, and a temperature TC of the refrigerant compressor 11 that the temperature sensor 16 detects. Here, as to the information to judge the condition of the load, instead of adopting all these information, any one of them or a combination of these three or below may be adopted, or the information may be replaced by the other information to judge the condition of the load (such as a high-low pressure difference detected by the pressure sensors 17 and 18, and an outside air temperature and so forth), or the information may include the above.

The control circuit 23 judges at step S1 whether the high-pressure-side pressure PH detected by the pressure sensor 17 is lower than a predetermined value A; and if it is judged lower, the process advances to step S2. At step S2, the control circuit 23 judges whether the halt time ts of the refrigerant compressor 11 is longer than a predetermined value B; and if it is judged longer, the process advances to step S3. At step S3, the control circuit 23 judges whether the valve opening degree VO of the expansion valve 13 is larger than a predetermined value C; and if it is judged larger, the process advances to step S4. At step S4, the control circuit 23 judges whether the temperature TC of the refrigerant compressor 11 that the temperature sensor 16 detects is lower than a predetermined value D; and if it is judged lower, the process advances to the condition 3 of step S5, and the control circuit 23 sets the duration of the attraction interval to E, sets the starting torque generated by the starting current to F, and sets the connecting frequency to G.

That the high-pressure-side pressure PH is lower than the value A, the halt time ts of the refrigerant compressor 11 is longer than the value B, the valve opening degree VO of the expansion valve 13 is larger than the value C, and the temperature TC of the refrigerant compressor 11 is lower than the value D shows a condition that the load is the lightest. Therefore, at step S5, the control circuit 23 sets the duration of the attraction interval to E being the shortest time, sets the starting torque (starting current) to F being the lowest, and sets the connecting frequency to G being the lowest. When the load of the refrigerant compressor 11 is light, the attraction time of the rotor needs only a short, the starting torque also needs only a low, and the connecting frequency to the vector control by the sensorless system also needs a low; accordingly, the motor 21 can be started smoothly.

As the starting current is decreased, wasteful power consumption will be reduced, as shown in Fig. 4. And when the load is light, the current and frequency being set at the time of shifting to the sensorless vector control become also low, and the connecting frequency is also lowered; the frequency fluctuations during shifting become decreased to minimize a risk of stepping-out, and a smooth shifting to the sensorless vector control can be realized. Further, the noises and vibrations are suppressed owing to the decreased starting current, and the time required for acceleration becomes shorter owing to the lowered connecting frequency.

Here, at step S1, if the high-pressure-side pressure PH is judged to be the predetermined value A or higher, the process advances from step S1 to step S6, the control circuit 23 judges whether the high-pressure-side pressure PH is higher than A and lower than the value O. And, if it is judged lower than O (A or higher and lower than O), the process advances to the condition 2 of step S10; and the control circuit 23 sets the duration of the attraction interval to I, sets the starting torque generated by the starting current to J, and sets the connecting frequency to K. The duration I is longer than E, the starting torque J is higher than F, and the connecting frequency K is higher than G, in comparison to the condition 3. In other words, when the high-pressure-side pressure PH is slightly higher and the load of the refrigerant compressor 11 is slightly increased, the control circuit 23 sets the attraction interval slightly longer, and sets the starting torque and the connecting frequency slightly higher to start the motor 21 smoothly.

And at step S2, if the halt time ts is judged to be the predetermined value B or shorter, the process advances from step S2 to step S7, the control circuit 23 judges whether the halt time ts is shorter than B and longer than P. And if it is longer than P B or shorter and longer than P), the process advances to the condition 2 of step S10. Even in case the halt time ts of the refrigerant compressor 11 becomes slightly shorter, since the load of the refrigerant compressor 11 increases slightly, the control circuit 23 follows the condition 2 of step S10 in the same manner.

And at step S4, the valve opening degree VO of the expansion valve 13 is not larger than the value C, the process advances from step S3 to step S8, and the control circuit 23 judges whether the valve opening degree VO is smaller than C and larger than Q. And if it is larger than Q (larger than Q and C or smaller), the process advances to the condition 2 of step S10 in the same manner. Even in case the valve opening degree VO of the expansion valve 13 becomes slightly smaller, since the load of the refrigerant compressor 11 increases slightly, the control circuit 23 follows the condition 2 of step S10 in the same manner.

And at step S4, the temperature TC of the refrigerant compressor 11 is judged the value D or higher, the process advances from step S4 to step S9, the control circuit 23 judges whether the temperature TC is higher than D and lower than H. And if it is lower than H (D or higher and not higher than H), the process advances to the condition 2 of step S10 in the same manner. Even in case the temperature TC of the refrigerant compressor 11 becomes slightly higher, since the load of the refrigerant compressor 11 increases slightly, the control circuit 23 follows the condition 2 of step S10 in the same manner.

Next at step S6, if the high-pressure-side pressure PH is judged to be the value O or higher, the process advances from step S6 to the condition 1 of step S11, the control circuit 23 sets the duration of the attraction interval to L, sets the starting torque generated by the starting current to M, and sets the connecting frequency to N. The duration L is longer than I, the starting torque M is higher than J, and the connecting frequency N is higher than K, in comparison to the condition 2. In other words, when the high-pressure-side pressure PH becomes still higher and the load of the refrigerant compressor 11 is further increased, the control circuit 23 sets the attraction interval still longer, and sets the starting torque and the connecting frequency still higher to start the motor 21 without hindrance.

And at step S7, if the halt time ts is judged P or shorter, the process advances from step S7 to the condition 1 of step S11. Even in case the halt time ts of the refrigerant compressor 11 becomes still shorter, the load of the refrigerant compressor 11 is further increased, and the control circuit 23 follows the condition 1 of step 11 in the same manner.

And at step S8, the valve opening degree VO of the expansion valve 13 is not larger than the value Q, the process advances from step S8 to the condition 1 of step S11. Even in case the valve opening degree VO of the expansion valve 13 is still smaller, the load of the refrigerant compressor 11 is further increased, and the control circuit 23 follows the condition 1 of step 11 in the same manner.

And at step S9, the temperature TC of the refrigerant compressor 11 is judged the value H or higher, the process advances from step S9 to the condition 1 of step S11. Even in case the temperature TC of the refrigerant compressor 11 becomes still higher, the load of the refrigerant compressor 11 increases further, the control circuit 23 follows the condition 1 of step S11 in the same manner, thereby starting the motor 21 without hindrance. When the load is increased, the current and frequency set during shifting to the sensorless vector control are also increased; accordingly, the fluctuations of the frequency during shifting become decreased as well.

Thus, as the load of the refrigerant compressor 11 is lightened, the control circuit 23 shortens the attraction interval and lowers the starting torque (starting current) and the connecting frequency; and as the load of the refrigerant compressor 11 becomes increased, the control circuit 23 extends the attraction interval and raises the starting torque (starting current) and the connecting frequency. Therefore, regardless of the load condition of the refrigerant compressor 11, a smooth shifting to the sensorless vector control can be performed continually.

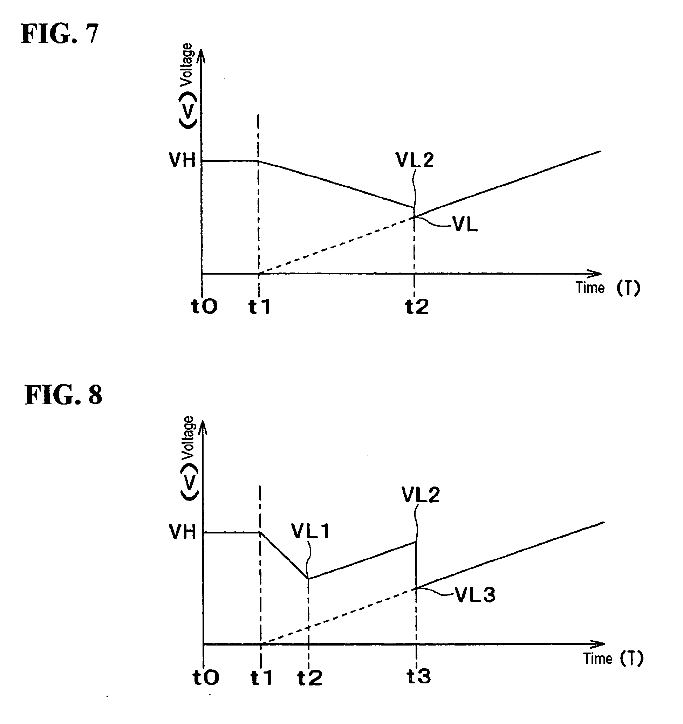

Fig. 7 and Fig. 8 illustrate the variations of voltages substantially applied to the stator windings, from a starting of the rotor after the rotor being fixed at a position till a shifting to the vector control by the sensorless system. In Fig. 7 and Fig. 8, the time t0 - t1 corresponds to the attraction interval L (seconds) of the condition 1, the attraction interval I (seconds) of the condition 2, and the attraction interval E (seconds) of the condition 3. After fixing the rotor (time t1), in Fig. 7, till the time t2 (time at which the rotational frequency of the rotor becomes a frequency equivalent to the connecting frequency), the applied voltage decreases from a voltage equivalent to the voltage VH (voltage corresponding to a current equivalent to the starting torque M (N) of the condition 1, voltage corresponding to a current equivalent to the starting torque J (N), voltage corresponding to a current equivalent to the starting torque F (N)) to VL2. This decreasing slope of the applied voltage assumes a value substantially the same as the increasing slope with time of the applied voltage used when the rotational frequency of the rotor is increased in the preset normal drive operation. Therefore, at the time t2 (time at which the rotational frequency of the rotor becomes a rotational frequency equivalent to the connecting frequency), the voltage applied to the stator windings does not necessarily become equal to the voltage corresponding to the rotational frequency at starting the drive by the sensorless vector control, and there appears a voltage difference between voltages VL2 and VL; however, the voltage VL2 and the voltage VL are close values. After shifting to the drive by sensorless system vector control, the rotor is accelerated to the rotational frequency calculated by the vector control on the basis of the load of the refrigerating circuit.

In Fig. 8 of the second embodiment, the applied voltage lowers from VH to VL1 in a predetermined slope from the time t1 to the time t2. The time t1 is a time of initiating the starting, and the time t2 is an arbitrarily determined time, which is a time not having a large difference with the time between the time t0 and the time t1. The slope of the voltage from the voltage VH to the voltage VL1 may adopt the same value as the decreasing slope of the voltage in Fig. 7. The time t3 corresponds to the time at which the rotational frequency of the rotor becomes a rotational frequency equivalent to the connecting frequency, in the same manner as Fig. 7, and the increasing slope of the applied voltage from the time t2 to the time t3 may be set to substantially the same as the increasing slope of the applied voltage in Fig. 7. In Fig. 8, the applied voltage at the time t3 is set higher than the applied voltage at a normal driving, and the rotor shifts to the vector control driving with maintaining a predetermined virtual state; therefore, the rotor can maintain the accelerated state as it is, in increasing the rotational frequency of the rotor after the time t3.

The above embodiments apply the present invention to the control of the motor that drives the refrigerant compressor used for an on-vehicle air conditioner; the application is not limited to this, but the present invention can effectively be applied to various types of refrigerating cycle equipments using the refrigerant compressor. The values of the various variables illustrated in the embodiments are not restrictive, but they can appropriately be set according to the equipment concerned within a range not departing from the spirit of the present invention.

## Claims

1. A control device of a motor for a refrigerant compressor comprising a refrigerating cycle annularly connecting at least a refrigerant compressor, a heat-source-side heat exchanger, a decompression device, and a user-side heat exchanger with a refrigerant piping, and a control device that switches ON/OFF switching elements forming an inverter circuit by a vector control using a d-axis being a magnetic flux direction that magnetic poles of a rotor of the refrigerant compressor form and a q-axis electrically perpendicular to the d-axis, and thereby controls currents carried into stator windings, wherein the control device sequentially switches ON/OFF patterns of the switching elements according to predetermined current carrying patterns to the stator windings by the vector control to drive the refrigerant compressor, sequentially switches, at starting the refrigerant compressor, the predetermined ON/OFF patterns of the switching elements by predetermined cycles to start the refrigerant compressor, shifts to a drive of switching the ON/OFF pattern of the switching element concerned by the vector control, when a rotational frequency of the rotor reaches a set rotational frequency, and varies the ON/OFF patterns of the switching elements at starting or voltages applied to the stator windings and the set rotational frequency, on the basis of a state of the refrigerating cycle at starting the refrigerant compressor.

2. A control device of a motor for a refrigerant compressor according to Claim 1, wherein the ON/OFF patterns of the switching elements at starting or the voltages applied to the stator windings are set in correspondence with the set rotational frequency.

3. A control device of a motor for a refrigerant compressor according to Claim 2, wherein the ON/OFF patterns of the switching elements at starting or the voltages applied to the stator windings vary in a manner that the currents carried in order into the stator windings decrease, and the currents decrease at least close to values equivalent to corresponding voltages when the set rotational frequency is applied to the rotational frequency in a voltage vs. rotational frequency characteristic used at driving the refrigerant compressor.

4. A control device of a motor for a refrigerant compressor according to Claim 2, wherein the ON/OFF patterns of the switching elements at starting or the voltages applied to the stator windings vary in a manner that the currents carried in order into the stator windings increase.

5. A control device of a motor for a refrigerant compressor according to Claim 2, wherein the ON/OFF patterns of the switching elements at starting or the voltages applied to the stator windings vary in a manner that the currents carried in order into the stator windings decrease and thereafter increase.

6. A control device of a motor for a refrigerant compressor according to Claim 2, wherein the ON/OFF patterns of the switching elements at starting or the voltages applied to the stator windings vary in a manner that the currents carried in order into the stator windings decrease and thereafter increase, and the currents vary in the same manner as an increasing slope of a voltage in a voltage vs. rotational frequency characteristic used at driving the refrigerant compressor.
